# EUROPÄISCHE PATENTSCHRIFT

(11) **EP 1 124 874 B1**
(45) Veröffentlichungstag und Bekanntmachung des Hinweises auf die Patenterteilung: **22.01.2003**
(21) Anmeldenummer: 99947382.0
(22) Anmeldetag: 17.09.1999
(51) Int. Cl.: C08G 18/28, C08G 18/38, C08G 18/62, C09D 17/00, C09D 11/00, B01F 17/00

(54) **DISPERGIERMITTEL**
DISPERSANT
AGENT DISPERSANT

(30) Priorität: 18.09.1998 DE 19842952
(43) Veröffentlichungstag der Anmeldung: 22.08.2001
(73) Patentinhaber: BASF AKTIENGESELLSCHAFT, 67056 Ludwigshafen (DE)
(72) Erfinder: WEINGART, Franz, D-69181 Leimen (DE); RAETHER, Roman, Benedikt, D-67117 Limburgerhof (DE); BAUER, Stephan, D-67126 Hochdorf-Assenheim (DE); HEES, Ulrike, D-68161 Mannheim (DE); MIELKE, Manfred, D-69118 Heidelberg (DE); SCHLÖSSER, Ulrike, D-67433 Neustadt (DE); SENS, Rüdiger, D-67069 Ludwigshafen (DE)
(74) Vertreter: Kinzebach, Werner, Dr.
(86) Internationale Anmeldenummer: EP9906915
(87) Internationale Veröffentlichungsnummer: WO00017250

(56) Entgegenhaltungen:
- EP-A- 0 610 534
- EP-A- 0 827 973
- US-A- 4 839 414
- US-A- 5 780 542

## Beschreibung

Die vorliegende Erfindung betrifft ein Dispergiermittel, seine Verwendung zum Dispergieren von Pigmenten und zur Herstellung einer Tintenstrahldruck-Tinte.

Als Dispergiermittel werden Substanzen bezeichnet, die das Dispergieren von Teilchen in einem Medium erleichtern, indem sie die Grenzflächenspannung zwischen den beiden Komponenten erniedrigen. Es handelt sich dabei im Allgemeinen um oberflächenaktive Stoffe von anionen- oder kationenaktiver sowie nichtionogener Struktur. Durch ein Dispergiermittel wird die Dispergierarbeit wesentlich erniedrigt. Dispergierte Feststoffe können aufgrund gegenseitiger Anziehungskräfte nach dem Dispergiervorgang wieder zum Reagglomerieren neigen. Die Verwendung von Dispergiermitteln wirkt auch der Reagglomerationsneigung der Feststoffe entgegen.

Besonders hohe Anforderungen an das verwendete Dispergiermittel werden bei der Dispergierung von Pigmenten, wie Farb- oder magnetischen Pigmenten, gestellt. Eine unzulängliche Dispergierung macht sich durch einen Viskositätsanstieg in flüssigen Systemen, Brillanzverluste und Farbtonverschiebungen bemerkbar. Eine besonders gute Dispersion des Farbpigmentes ist bei Tinten zur Verwendung in Tintenstrahldruckern (Inkjet-Tinten) erforderlich, um einen ungehinderten Durchgang der Farbpigmentteilchen durch die oft nur einen Durchmesser von wenigen Mikrometern aufweisenden Düsen des Druckkopfes zu gewährleisten. Außerdem muss in den Betriebspausen des Druckers ein Agglomerieren der Pigmentteilchen und ein damit zusammenhängendes Verstopfen der Druckerdüsen vermieden werden.

Polymere Dispergiermittel weisen in einem Teil des Moleküls sogenannte Ankergruppen auf (Ankergruppenblock), die sich an den zu dispergierenden Feststoff anlagern. In einem räumlich davon getrennten Teil des Moleküls weisen die polymeren Dispergiermittel eine Polymerkette auf, die nach außen ragt und die Feststoffteilchen mit dem Dispersionsmedium verträglich macht bzw. stabilisiert (Stabilisatorblock). Polymere Dispergiermittel auf der Basis von polyfunktionellen Isocyanaten, einer polymeren Verbindung und Verbindungen, die dispergieraktive Gruppen tragen, sind z. B. in der DE-A-21 25 065, der WO 97/12923, der DE-A-36 41 581, der WO 95/30045 und der EP-A-0 742 238 beschrieben.

Die EP-A-0 610 534 beschreibt ein Verfahren zur Herstellung eines modifizierten Copolymers als Pigmentdispergiermittel, bei dem man ein eine Isocyanatgruppe aufweisendes ethylenisch ungesättigtes Monomer mit einem ethylenisch ungesättigten Monomer polymerisiert, das keine Isocyanat-reaktiven Gruppen aufweist, und die Isocyanatgruppe mit einem Polyalkylenglykolmonoalkylether oder -amin umsetzt.

Im Allgemeinen müssen die Ankergruppen speziell auf den zu dispergierenden Feststoff, zum Beispiel unterschiedliche Farbpigmente, angepasst werden, da es sonst bei der Formulierung des Endprodukts bzw. bei der Lagerung zu einer Desorption der Ankergruppen und zu einer Instabilisierung der Dispersion kommen kann. Die Notwendigkeit der individuellen Anpassung des Dispergiermittels an das Pigment ist nachteilig. Es hat sich außerdem gezeigt, dass die bislang verwendeten Inkjet-Tinten hinsichtlich ihrer optischen Dichte beim Bedrucken von cellulosischen Substraten verbesserungsbedürftig sind.

Der vorliegenden Erfindung lag daher die Aufgabe zugrunde, ein Dispergiermittel bereitzustellen, das mit einer großen Zahl von Pigmenten unterschiedlicher Konstitution stabile Dispersionen liefert und zu Inkjet-Tinten mit verbesserter optischer Dichte beim Bedrucken von cellulosischen Substraten führt.

Erfindungsgemäß wird diese Aufgabe durch ein polymeres Dispergiermittel gelöst, das durch Umsetzung
(i) eines di- oder polyfunktionellen Isocyanats mit
(ii) einer polymeren Verbindung der allgemeinen Formel

   R³-Mₙ-XH

   worin
   - X: für COO, O, S oder NR¹ und R¹ für H oder eine C₁-C₆-Alkylgruppe steht,
   - R³: für Wasserstoff, C₁- bis C₂₈-Alkyl, C₂- bis C₂₈-Alkenyl, C₂- bis C₂₈-Alkinyl oder den Rest eines radikalischen Polymerisationsinitiators oder eines Kettenreglers steht,
   - M: für gleiche oder verschiedene einpolymerisierte Einheiten von Monomeren, ausgewählt unter α,β-ethylenisch ungesättigten Mono- oder Dicarbonsäuren; gegebenenfalls mit Hydroxy, C₁-C₆-Alkoxy, Polyalkylenoxy oder Halogen einoder mehrfach substituierten C₁-C₂₀-(Cyclo)alkyl- oder C₇-C₂₀-Aralkylestern, Amiden, Nitrilen oder Anhydriden von α,β-ethylenisch ungesättigten Mono- oder Dicarbonsäuren; Vinyl- oder Allylestern aliphatischer oder aromatischer Carbonsäuren; Vinyl- oder Allylethern; ethylenisch ungesättigten Sulfonsäuren oder Sulfonsäurederivaten; gegebenenfalls halogenierten ethylenisch ungesättigten aliphatischen C₂-C₂₀-Kohlenwasserstoffen; aromatischen ethylenisch ungesättigten Verbindungen oder zu Polyphosphacenen polymerisierbaren Verbindungen; oder für 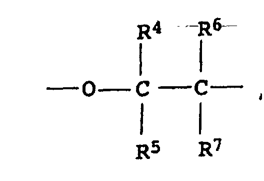 ―O―CO―R⁸―, ―CO―O―R⁸―
   oder ―CO―O―R⁹―O―CO―R¹⁰―
   steht, worin R⁴, R⁵, R⁶ und R⁷ unabhängig voneinander für H, C₁- bis C₆-Alkyl, C₆-bis C₂₀-Aryl, -CH₂-Cl oder -CH₂-OH stehen, und R⁸, R⁹ und R¹⁰ unabhängig voneinander für eine C₂- bis C₂₀-Alkylen-, Arylen oder Aralkylengruppe stehen, und
   - n: für eine ganze Zahl zwischen 0 und 10 000 steht; und entweder
(iii) einem an einem Kettenende mit einer Gruppe YH terminierten Homopolymer eines unter N-Vinylamiden, N-Vinyllactamen, vinyl- oder allylsubstituierten stickstoffhaltigen Heterocyclen ausgewählten Monomers oder Copolymer eines oder mehrerer der genannten Monomere und gegebenenfalls weiterer Monomere, wobei Y für COO, O, S oder NR² und R² für H oder eine C₁- bis C₆-Alkylgruppe steht; oder
(iv) einem eine Gruppe YH aufweisenden organischen Phosphonsäureester, wobei Y die bereits angegebene Bedeutung hat,
erhältlich ist.

Das erfindungsgemäße polymere Dispergiermittel ist demzufolge durch Umsetzung dreier zwingender Komponenten erhältlich, nämlich einem Di- oder Polyisocyanat, das als Verknüpfungsstelle dient, einer polymeren Verbindung (im Folgenden "Stabilisatorblock"), die an einem Kettenende mit einer isocyanatreaktiven Gruppe terminiert ist und einem Ankergruppenblock, der entweder ein Homooder Copolymer eines ausgewählten stickstoffhaltigen Monomers oder ein organischer Phosphonsäureester sein kann, die jeweils über eine isocyanatreaktive Gruppe verfügen. Die Begriffe "Stabilisatorblock" und "Ankergruppenblock" sind zur leichteren Bezugnahme für die Zwecke der folgenden Beschreibung eingeführt. In der Regel lagert sich der Ankergruppenblock an den zu dispergierenden Feststoff an. Im Einzelfall können die Verhältnisse aber auch anders sein.

Die chemische Natur des Stabilisatorblocks ist nicht besonders kritisch. Im Allgemeinen ist bevorzugt, dass die polymere Verbindung wasserlöslich oder wasserquellbar ist. Die polymere Verbindung weist daher vorzugsweise hydrophil machende Strukturelemente, wie Ether-, Ester- oder Amidgruppen auf. Die polymere Verbindung trägt an einem Kettenende eine isocyanatreaktive Gruppe. Vorzugsweise trägt sie entlang der Kette keine weiteren isocyanatreaktiven Gruppen.

Die polymere Verbindung kann durch anionische, kationische oder vorzugsweise radikalische Polymerisation ethylenisch ungesättigter Monomere hergestellt werden. Geeignete Monomere sind α,β-ethylenisch ungesättigte Mono- oder Dicarbonsäuren, wie Acrylsäure, Methacrylsäure, Zimtsäure, Maleinsäure, Fumarsäure oder Itaconsäure; gegebenenfalls mit Hydroxy, C₁-C₆-Alkoxy, Polyalkylenoxy oder Halogen substituierte C₁-C₂₀-(Cyclo)alkylester, Amide, Nitrile oder Anhydride von α,β-ethylenisch ungesättigten Mono- oder Dicarbonsäuren, wie Methyl(meth)acrylat, Ethyl(meth)acrylat, Propyl(meth)acrylat, Butyl(meth)acrylat, Hexyl(meth)acrylat, 2-Ethylhexyl(meth)acrylat, Stearyl(meth)acrylat, Lauryl(meth)-acrylat, Cyclohexyl(meth)acrylat, Benzyl(meth)acrylat, Trifluormethyl(meth)acrylat, Hexafluorpropyl(meth)acrylat, Tetrafluorpropyl(meth)acrylat, Polypropylenglykolmono(meth)acrylate, Polyethylenglykolmono(meth)acrylate; Vinyl- oder Allylester aliphatischer oder aromatischer Carbonsäuren, wie z. B. Vinylacetat, Vinylpropionat, Vinylbutanat, Vinylhexanoat, Vinyloctanoat, Vinyldecanoat, Vinylstearat, Vinylpalmitat, Vinylcrotonat, Divinyladipat, Divinylsebacat, 2-Vinyl-2- ethylhexanoat, Vinyltrifluoracetat; Allylacetat, Allylpropionat, Allylbutanat, Allylhexanoat, Allyloctanoat, Allyldecanoat, Allylstearat, Allylpalmitat, Allylcrotonat, Allylsalicylat, Allyllactat, Diallyloxalat, Allylstearat, Allylsuccinat, Diallylglutarat, Diallyladipat, Diallylpimelat, Diallylcinnamat, Diallylmaleat, Diallylphthalat, Diallylisophthalat, Triallylbenzol-1,3,5-tricarboxylat, Allylfluoracetat, Allylperfluorbutyrat, Allylperfluoroctanoat; ethylenisch ungesättigte Sulfonsäuren und Sulfonsäurederivate, wie Vinylsulfonsäure, Allyl- und Methallylsulfonsäure, deren Ester und Halogenide, Benzolsulfonsäurevinylester, 4-Vinylbenzolsulfonsäureamid; Vinyloder Allylether, wie Vinylmethylether, Vinylethylether, Vinylpropylether, Vinylisopropylether, Vinylbutylether, Vinylisobutylether, Vinylhexylether, Vinyloctylether, Vinyldecylether, Vinyldodecylether, Vinyl-2-Ethylhexylether, Vinylcyclohexylether, Vinylbenzylether, Vinyltrifluormethylether, Vinylhexafluorpropylether und Vinyltetrafluorethylether; gegebenenfalls halogenierte ethylenisch ungesättigte aliphatischen C₂-C₂₀-Kohlenwasserstoffe, wie Ethylen, Propylen, Butylen, Isobuten, Hexen, Vinylcyclohexan; Vinylidenfluorid, Vinylidenchlorid, vinylfluorid, Vinylchlorid, Hexafluorpropen, Trifluorpropen, 1,2-Dichlorethylen, 1,2-Difluorethylen und Tetrafluorethylen; aromatische ethylenisch ungesättigte Verbindungen, wie Styrol und α-Methylstyrol; und zu Polyphosphacenen polymerisierbare Verbindungen, wie Phosphornitridchloride, wie z. B. Phosphordichloridnitrid, Hexachlor(triphosphacen) sowie deren durch Alkoxy-, Phenoxy-, Amino- und Fluoralkoxygruppen teilweise oder vollständig substituierte Derivate. Bevorzugt sind C₁- bis C₂₀-Alkyl(meth)acrylate, wie Methyl(meth)-acrylat, Ethyl(meth)acrylat, Propyl(meth)acrylat, Butyl(meth)-acrylat, Hexyl(meth)acrylat, 2-Ethylhexyl(meth)acrylat; C₂- bis C₂₀-Hydroxyalkyl(meth)acrylate, wie 2-Hydroxyethyl(meth)acrylat; Styrol; (Meth)acrylnitril; (Meth)acrylamid; C₂- bis C₂₀-Alkansäurevinylester, wie Vinylacetat; C₁- bis C₂₀-Alkylvinylether, wie Methylvinylether, Ethylvinylether; olefinische Kohlenwasserstoffe, wie Ethen, Propen, Buten, Butadien; Vinylchlorid; Vinylfluorid, Vinylidendifluorid; Hexafluorpropen. Die Verwendung von C₁- bis C₈-Alkyl(meth)acrylaten ist besonders bevorzugt.

Die polymere Verbindung muss an mindestens einem Kettenende mit einer isocyanatreaktiven Gruppe XH terminiert sein. Man erreicht dies mit Initiatoren, welche beim Zerfall zum Beispiel ein Hydroxylradikal liefern und/oder mit Kettenreglern, die zum Beispiel eine Hydroxyl- oder Mercaptofunktion enthalten. Initiatoren dieser Art sind zum Beispiel tert-Butylhydroperoxid, Tetrahydrofuranhydroperoxid, Cumolhydroperoxid oder 2,2'-Azobis(2-methyl-N-(2-hydroxyethyl)propionamid). Führt man die Hydroxylgruppe nur über einen Regler ein, können auch andere Initiatoren verwendet werden, die unter den Reaktionsbedingungen in Radikale zerfallen, wie Peroxide, Hydroperoxide, Persulfate, Perazoverbindungen und Redoxkatalysatoren, die eine oxidierende Komponente und eine reduzierende Komponente, wie z. B. Ascorbinsäure, Glucose, Hydrogensulfite, umfassen. Spezielle Beispiele geeigneter Initiatoren sind z. B. Azobis(isobutyronitril), Di(tert-butyl)peroxid, Didodecanoylperoxid, Dibenzoylperoxid, Peressigsäure-tert-butylester oder 2-Methyl-perproprionsäure-tert-butylester.

Geeignete Regler sind Aminoalkohole, Aminophenole sowie insbesondere Thioalkanole, wie 3-Hydroxypropanthiol, 2-Hydroxyethyl-3-mercaptoproprionsäureester und insbesondere 2-Hydroxyethanthiol (Mercaptoethanol). Es können auch Gemische verschiedener Initiatoren und/oder Kettenregler eingesetzt werden. Die Initiatoren und/oder Kettenregler werden im Allgemeinen in einer Menge von -0,1 bis 20 Gew.-%, vorzugsweise 0,1 bis 5 Gew.-%, bezogen auf das eingesetzte Gemisch aus Monomeren, verwendet. Soweit diese polymeren Verbindungen nicht im Handel erhältlich sind, können sie nach üblichen Emulsions-, Suspensions- oder Lösungspolymerisationsverfahren hergestellt werden.

Die polymere Verbindung kann ein Monoalkylether eines Polyoxyalkylenglykols sein. Derartige Verbindungen werden z. B. durch Umsetzung eines Alkanols mit Alkenoxiden, wie Ethylenoxid, Propylenoxid oder Butylenoxid, oder Epichlorhydrin erhalten. Bevorzugte Verbindungen dieser Art sind mit 5 bis 10 000, vorzugsweise 5 bis 80 mol Ethylenoxid und/oder Propylenoxid alkoxylierte C₁-C₁₈-Alkanole.

Die polymere Verbindung kann außerdem ein Polyester sein. Dieser kann nach einer beliebigen Herstellungsweise für Polyester hergestellt werden. Beispiele dafür sind die Polymerisation von Lactonen, z. B. Propiolacton, Caprolacton und Pivalolacton; die Kondensation von Hydroxysäuren, z. B. 10-Hydroxydecansäure und 12-Hydroxystearinsäure; und die Kondensation von Diolen und Dicarbonsäure, z. B. Ethylenglykol/Decamethylendicarbonsäure, Hexamethylenglykol/Bernsteinsäure. Die Bildung von Polyestern, die an beiden Enden mit Hydroxylgruppen und/oder Carboxylgruppen terminiert sind, sollte auf ein Minimum herabgesetzt werden. Dies kann durch Mitverwendung von Monocarbonsäuren oder Monoolen erreicht werden. Beispiele hierfür sind Ölsäure, Stearinsäure, Linolsäure oder Oxoalkohole.

Die Verwendung von Polyoxyalkylenglykolmonoalkylethern, insbesondere Polyoxyethylenglykolmonomethylether, oder eines Polymers eines oder mehrerer C₁- bis C₄-Alkylmethacrylate, wie eines Copolymers von Methylmethacrylat und Butylmethacrylat, ist besonders bevorzugt.

Das gewichtsmittlere Molekulargewicht des Stabilisatorblocks beträgt vorzugsweise etwa 250 bis 1 000 000, insbesondere etwa 500 bis 7 000.

Als Verknüpfungsstelle für die erfindungsgemäßen polymeren Dispergiermittel dienen übliche Diisocyanate und/oder übliche höher funktionelle Polyisocyanate mit einer mittleren NCO-Funktionalität von 2,0 bis 4,5. Diese Komponenten können alleine oder im Gemisch vorliegen.

Beispiele für übliche Diisocyanate sind aliphatische Diisocyanate, wie Tetramethylendiisocyanat, Hexamethylendiisocyanat, Octamethylendiisocyanat, Decamethylendiisocyanat, Dodecamethylendiisocyanat, Tetradecamethylendiisocyanat, Trimethylhexandiisocyanat oder Tetramethylhexandiisocyanat, cycloaliphatische Diisocyanate, wie 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan(isophorondiisocyanat) oder 2,4- oder 2,6-Diisocyanato-1-methylcyclohexan sowie aromatische Diisocyanate, sowie 2,4- oder 2,6-Toluylendiisocyanat, Tetramethylxylylendiisocyanat, p-Xylylendiisocyanat, 2,4'- oder 4,4'-Diisocyanatdiphenylmethan, 1,3- oder 1,4-Phenylendiisocyanat, 1-Chlor-2,4-phenylendiisocyanat, 1,5-Naphthylendiisocyanat, Diphenylylen-4,4'-diisocyanät, 4,4'-Diisocyanato-3,3'-dimethyldiphenyl, 3-Methyldiphenylmethan-4,4'-diisocyanat oder Diphenylether-4,4'-diisocyanat. Es können auch Gemische der genannten Diisocyanate vorliegen. Bevorzugt werden hiervon aliphatischen Diisocyanate, insbesondere Hexamethylendiisocyanat und Isophorondiisocyanat.

Als übliche höher funktionelle Polyisocyanate eignen sich beispielsweise Triisocyanate, wie 2,4,6-Triisocyanatotoluol oder 2,4,4'-Triisocyanatodiphenylether oder die Gemische aus Di-, Triund höheren Polyisocyanaten, die durch Phosginierung von entsprechenden Anilin/Formaldehyd-Kondensaten erhalten werden und Methylenbrücken aufweisende Polyphenylpolyisocyanate darstellen.

Von besonderem Interesse sind übliche aliphatische höher funktionelle Polyisocyanate der folgenden Gruppen:
(a) Isocyanuratgruppen aufweisende Polyisocyanate von aliphatischen und/oder cycloaliphatischen Diisocyanaten. Besonders bevorzugt sind hierbei die entsprechenden Isocyanato-Isocyanurate auf Basis von Hexamethylendiisocyanat und Isophorondiisocyanat. Bei diesen Isocyanuraten handelt es sich insbesondere um einfache Tris-isocyanatoalkyl- bzw. Triisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-%, und eine mittlere NCO-Funktionalität von 2,6 bis 4,5.
(b) Uretdiondiisocyanate mit aliphatisch und/oder cycloaliphatisch gebundenen Isocyanatgruppen, die sich vorzugsweise von Hexamethylendiisocyanat oder Isophorondiisocyanat ableiten. Bei Uretdiondiisocyanaten handelt es sich um cyclische Dimerrisierungsprodukte von Diisocyanaten.
(c) Biuretgruppen aufweisende Polyisocyanate mit aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate haben im Allgemeinen einen NCO-Gehalt von 18 bis 25 Gew.-% und eine mittlere NCO-Funktionalität von 3 bis 4,5.
(d) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen, wie Trimethylolpropan, Glycerin, 1,2-Dihydroxypropan oder deren Gemischen erhalten werden können. Diese Urethan- und/oder Allophanatgruppen aufweisenden Polyisocyanate haben im Allgemeinen einen NCO-Gehalt von 12 bis 20 Gew.-% und eine mittlere NCO-Funktionalität von 2,5 bis 3.
(e) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
(f) Uretonimin-modifizierte Polyisocyanate.

Zur Herstellung des erfindungsgemäßen polymeren Dispergiermittels sind aliphatische Diisocyanate und aliphatische höher funktionelle Polyisocyanate besonders bevorzugt. Polyisocyanate mit einer mittleren NCO-Funktionalität von 1,7 bis 5, insbesondere etwa 3, sind besonders bevorzugt.

In einer Ausführungsform der Erfindung handelt es sich bei dem Ankergruppenblock um ein Homopolymer eines unter N-Vinylamiden, N-Vinyllactamen, vinyl- oder allylsubstituierten stickstoffhaltigen Heterocyclen ausgewählten Monomers oder ein Copolymer eines oder mehrerer der genannten Monomere und gegebenenfalls weiterer Monomere. Als weitere Monomere kommen z. B. Acrylsäure, Acrylund Methacrylsäureester, Acrylamid, Methacrylamid und Vinylester in Frage. Die weiteren Monomere stellen vorzugsweise weniger als 50 Mol-%, insbesondere weniger als 15 Mol-% der gesamten Monomereinheiten dar. Vorzugsweise umfasst der Ankergruppenblock einpolymerisierte Einheiten von N-Vinylpyrrolidon, N-Vinylcaprolactam, N-Vinylimidazol und/oder N-Vinylformamid und besteht insbesondere ausschließlich daraus. Es ist weiterhin bevorzugt, dass der Anteil an N-Vinylpyrrolidoneinheiten 50 Mol-% oder höher, bezogen auf die gesamten Monomereinheiten, ist. Die Verwendung von Polyvinylpyrrolidon ist besonders bevorzugt. Weitere geeignete Monomere sind z. B. 2- und 4-Vinylpyridin. Die Polymere von Vinylpyrrolidon und der anderen Vinylverbindungen können durch radikalische Polymerisation nach Verfahren der Lösungs- oder Suspensionspolymerisation unter Einsatz von Radikalbildenden als Initiatoren hergestellt werden. Das Homo- oder Copolymer weist vorzugsweise einen K-Wert von 10 bis 100, insbesondere 10 bis 30 auf. Erfindungsgemäß muss das Homo- oder Copolymer mit einer isocyanatreaktiven Gruppe terminiert sein. Man erreicht dies, indem man die Polymerisation in Wasser oder einem niederen Alkohol, wie z. B. Isopropanol, durchführt. Die Polymerisation kann aber auch in inerten organischen Lösungsmitteln durchgeführt werden, wobei ein Kettenregler, z. B. ein Thioalkanol, insbesondere Mercaptoethanol, verwendet wird. Man kann auch Initiatoren verwenden, die beim Zerfall ein Hydroxyl-Radikal liefern.

In einer anderen Ausführungsform der Erfindung ist der Ankergruppenblock ein organischer Phosphonsäureester, der mindestens eine isocyanatreaktive Gruppe aufweist. Der Phosphonsäureester kann eine oder mehrere Phosphonatgruppen aufweisen. Derartige Verbindungen können z. B. durch die Michaelis-Arbusow-Reaktion hergestellt werden, wobei die isocyanatreaktive Gruppe durch geeignete Wahl der Ausgangsverbindungen eingeführt wird. Vorzugsweise weist der Phosphonsäureester folgende allgemeine Strukturformel auf: 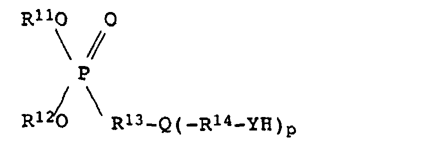 in der
- R¹¹ und R¹²: unabhängig voneinander für C₁-C₄-Alkyl, insbesondere R¹¹ = R¹² für Methyl oder Ethyl stehen;
- Q: für NR₍₂₋ₚ₎ oder CR₍₃₋ₚ₎ steht (R = H oder C₁- bis C₈-Alkyl);
- R¹³ und R¹⁴: unabhängig voneinander für eine chemische Bindung oder für gegebenenfalls mit C₁- bis C₈-Alkyl oder Aryl substituiertes C₁-C₁₀-Alkylen stehen, das gegebenenfalls durch O, NR, CO, COO, OCO, CONR oder NRCO unterbrochen sein kann;
- p: für 1 oder 2 steht; und
- Y: die bereits angegebene Bedeutung hat.

Ein bevorzugtes Beispiel eines erfindungsgemäß zu verwendeten Phosphonsäureesters ist N,N-Bis(hydroxyethyl)aminomethyl-phosphonsäurediethylester. Andere Beispiele sind die Dimethyl- oder Diethylester von 3-Hydroxymethylamino-3-oxopropylphosphonsäure, 3-Aminopropylphosphonsäure, 1-Aminopropylphosphonsäure, 2-Aminooctylphosphonsäure, 1-Aminooctylphosphonsäure, 1-Aminobutylphosphonsäure, Hydroxymethylphosphonsäure und 1-Hydroxyethylphosphonsäure.

Die Umsetzung des Di- oder polyisocyanats mit dem Stabilisatorblock und dem Ankergruppenblock kann zweistufig oder in einer Eintopfreaktion erfolgen. Vorzugsweise erfolgt die Umsetzung jedoch zweistufig, wobei in einer ersten Stufe das Di- oder Polyisocyanat mit dem Stabilisatorblock umgesetzt wird. Die Umsetzung kann in Substanz oder in einem Lösungsmittel erfolgen, wobei die Umsetzung in einem Lösungsmittel, wie Aceton, THF, Toluol, Dioxan, bevorzugt ist. Wenn der Stabilisatorblock durch Polymerisation einer ethylenisch ungesättigten Verbindung hergestellt worden ist, kann die Umsetzung des Stabilisatorblocks mit dem Dioder Polyisocyanat vorteilhaft im gleichen Lösungsmittel wie die radikalische Polymerisation durchgeführt werden. Die Reaktion kann ohne Katalysator oder bevorzugt in Anwesenheit eines Katalysators, wie einem tertiären Amin, insbesondere Triethylamin, oder einem Metallsalz, insbesondere Zinnoctoat oder Bleioctoat, oder einer metallorganischen Verbindung, wie Dibutylzinndilaurat oder Titantetramethylat durchgeführt werden. Die Umsetzung kann im Allgemeinen bei einer Temperatur von Raumtemperatur bis 125 °C, insbesondere 40 bis 90 °C, durchgeführt werden.

Das Umsetzungsprodukt kann aus dem Reaktionsgemisch nach bekannten Verfahren, z. B. durch Extraktion oder Fällung, isoliert werden. Vorzugsweise wird es jedoch ohne Isolierung mit dem Ankergruppenblock umgesetzt. Die Umsetzung mit dem Ankergruppenblock kann lösungsmittelfrei oder vorteilhaft in Gegenwart eines organischen Lösungsmittels, insbesondere in dem Lösungsmittel, in dem die Umsetzung des Di- oder Polyisocyanats mit dem Stabilisatorblock erfolgte, durchgeführt werden. Die Reaktion kann katalysiert werden, wobei die vorstehend angegebenen Katalysatoren Verwendung finden können.

Der Stabilisatorblock wird vorzugsweise in einer Menge eingesetzt, die zur Reaktion mit 5 bis 80 % der Isocyanatgruppen des Polyisocyanats ausreicht, und der Ankergruppenblock wird vorzugsweise in einer Menge eingesetzt, die zur Reaktion mit 5 bis 80 % der Isocyanatgruppen des Polyisocyanats ausreicht. Insbesondere wird ein Di- oder Polyisocyanat der Funktionalität n mit solchen Mengen an Stabilisator- und Ankergruppenblock umgesetzt, dass auf 1 mol Di- oder Polyisocyanat etwa 1 mol Stabilisatorblock und (n-1) mol Ankergruppenblock entfallen. In einer bevorzugten Ausführungsform wird ein im Mittel trifunktionelles Isocyanat mit etwa 1 mol Stabilisatorblock und etwa 2 mol Ankergruppenblock umgesetzt. Es ist bevorzugt, nach der Umsetzung mit dem Stabilisatorblock die Zahl der freien Isocyanatgruppen, z. B. nach DIN EN 1242, zu bestimmen und den Ankergruppenblock in einer Menge zuzugeben, die zur Absättigung der freien Isocyanatgruppen ausreichend ist. Alternativ kann der Ankergruppenblock in einer zur Absättigung der freien Isocyanatgruppen nicht ausreichenden Menge zugegeben werden. Die verbleibenden Isocyanatgruppen können dann mit Wasser oder anderen Reagenzien unter Ausbildung von Harnstoff-, Carbamat- oder Thiocarbamatbindungen umgesetzt werden.

Die erfindungsgemäßen polymeren Dispergiermittel eignen sich als Einzelsubstanz oder im Gemisch besonders zur Benetzung, Dispergierung und Stabilisierung von Pigmenten in wässrigen oder lösemittelhaltigen Suspensionen. Es hat sich gezeigt, dass die erfindungsgemäßen Dispergiermittel zu einer guten Fixierung der Pigmente an insbesondere cellulosischen Fasern führen, was durch hervorragende Nass- und Trockenabriebfestigkeiten belegt wird. Die Pigmente können unter Buntpigmenten oder magnetischen Pigmenten ausgewählt sein. Beispiele für geeignete Pigmente sind dabei organische Pigmente in Form von
Monoazopigmenten, wie C.I. Pigment Brown 25; C.I. Pigment Orange 5, 13, 36 und 67; C.I. Pigment Red 1, 2, 3, 5, 8, 9, 12, 17, 22, 23, 31, 48:1, 48:2, 48:3, 48:4, 49, 49:1, 52:1, 52:2, 53, 53:1, 53:3, 57:1, 63, 251, 112, 146, 170, 184, 210 und 245; C.I. Pigment Yellow 1, 3, 73, 74, 65, 97, 151 und 183; Disazopigmenten, wie C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188; Anthanthronpigmenten, wie C.I. Pigment Red 168 (C.I. Vat Orange 3); Anthrachinonpigmenten, wie C.I. Pigment Yellow 147 und 177, C.I. Pigment Violet 31; Anthrapyrimidinpigmenten, wie C.I. Pigment Yellow 108 (C.I. Vat Yellow 20); Chinacridonpigmenten, wie C.I. Pigment Red 122, 202 und 206; C.I. Pigment Violet 19; Chinophthalonpigmenten, wie C.I. Pigment Yellow 138; Dioxazinpigmenten, wie C.I. Pigment Violet 23 und 37; Flavanthronpigmenten, wie C.I. Pigment Yellow 24 (C.I. Vat Yellow 1); Indanthronpigmenten, wie C.I. Pigment Blue 60 (C.I. Blue 4) und 64 (C.I. Vat Blue 6); Isoindolinpigmenten, wie C.I. Pigment Orange 69; C.I. Pigment Red 260; C.I. Pigment Yellow 139 und 185; Isoindolinonpigmenten, wie C.I. Pigment Orange 61; C.I. Pigment Red 257 und 260; C.I. Pigment Yellow 109, 110, 173 und 185; Isoviolanthronpigmenten, wie C.I. Pigment Violet 31 (C.I. Vat Violet 1); Metallkomplexpigmenten, wie C.I. Pigment Yellow 117, 150 und 153; C.I. Pigment Green 8; Perinonpigmenten, wie C.I. Pigment Orange 43 (C.I. Vat Orange 7); C.I. Pigment Red 194 (C.I. Vat Red 15); Perylenpigmenten, wie C.I. Pigment Black 31 und 32; C.I. Pigment Red 123, 149, 178 179 (C.I. Vat Red 23), 190 (C.I. Vat Red 29) und 224; C.I. Pigment Violet 29; Phthalocyaninpigmenten, wie C.I. Pigment Blue 15, 15:1, 15:2, 15:3, 15:4, 15:6 und 16; C.I. Pigment Green 7 und 36; Pyranthronpigmenten, wie C.I. Pigment Orange 51; C.I. Pigment Red 216 (C.I. Vat Orange 4); Thioindigopigmenten, wie C.I. Pigment Red 88 und 181 (C.I. Vat Red 1); C.I. Pigment Violet 38 (C.I. Vat Violet 3); Triarylcarboniumpigmenten, wie C.I. Pigment Blue 1, 61 und 62; C.I. Pigment Green 1; C.I. Pigment Red 81, 81:1 und 169; C.I. Pigment Violet 1, 2, 3 und 27; sowie C.I. Pigment Black 1 (Anilinschwarz); C.I. Pigment Yellow 101 (Aldazingelb); C.I. Pigment Brown 22;
Küpenfarbstoffe (außer den bereits oben genannten), wie C.I. Vat Yellow 2, 3, 4, 5, 9, 10, 12, 22, 26, 33, 37, 46, 48, 49 und 50; C.I. Vat Orange 1, 2, 5, 9, 11, 13, 15, 19, 26, 29, 30 und 31; C.I. Vat Red 2, 10, 12, 13, 14, 16, 19, 21, 31, 32, 37, 41, 51, 52 und 61; C.I. Vat. Violet 2, 9, 13, 14, 15, 17 und 21; C.I. Vat Blue 1 (C. I. Pigment Blue 66), 3, 5, 10, 12, 13, 14, 16, 17, 18, 19, 20, 22, 25, 26, 29, 30, 31, 35, 41, 42, 43, 64, 65, 66, 72 und 74; C.I. Vat Green 1, 2, 3, 5, 7, 8, 9, 13, 14, 17, 26, 29, 30, 31, 32, 33, 40, 42, 43, 44 und 49; C.I. Vat Brown 1, 3, 4, 5, 6, 9, 11, 17, 25, 32, 33, 35, 38, 39, 41, 42, 44, 45, 49, 50, 55, 57, 68, 72, 73, 80, 81, 82, 83 und 84; C.I. Vat Black 1, 2, 7, 8, 9, 13, 14, 16, 19, 20, 22, 25, 27, 28, 29, 30, 31, 32, 34, 36, 56, 57, 58, 63, 64 und 65;
anorganische Pigmente, in Form von Weißpigmenten, wie Titandioxid (C.I. Pigment White 6), Zinkweiß, Farbenzinkoxid; Zinksulfid, Lithopone; Bleiweiß; Schwarzpigmente, wie Eisenoxidschwarz (C.I. Pigment Black 11), Eisen-Mangan-Schwarz, Spinellschwarz (C.I. Pigment Black 27); Ruß (C.I. Pigment Black 7); Buntpigmente, wie Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36); Ultramarinblau; Eisenblau (C.I. Pigment Blue 27); Manganblau; Ultramarinviolett; Kobaltund Manganviolett; Eisenoxidrot (C.I. Pigment Red 101); Cadmiumsulfoselenid (C.I. Pigment Red 108); Molybdatrot (C.I. Pigment Red 104); Ultramarinrot; Eisenoxidbraun, Mischbraun, Spinell- und Korundphasen (C.I. Pigment Brown 24, 29 und 31), Chromorange; Eisenoxidgelb (C.I. Pigment Yellow 42); Nickeltitangelb (C.I. Pigment Yellow 53; C.I. Pigment Yellow 157 und 164); Chromtitangelb; Cadmiumsulfid und Cadmiumzinksulfid (C.I. Pigment Yellow 37 und 35);: Chromgelb (C.I. Pigment Yellow 34), Zinkgelb, Erdalkalichromate; Neapelgelb; Bismutvanadat (C.I. Pigment Yellow 184); Interferenzpigmente, wie Metalleffektpigmente auf der Basis beschichteter Metallplättchen; Perlglanzpigmente auf der Basis metalloxidbeschichteter Glimmerplättchen; Flüssigkristallpigmente.

Als magnetische Pigmente kommen die üblichen oxidischen Pigmente, wie γ-Fe₂O₃, γ-Fe₃O₄, und CrO₂ oder metallische Pigmente, wie Fe, Co, Ni in Betracht. Diese Pigmente spielen bei der Herstellung magnetischer Aufzeichnungsmaterialien eine Rolle. Dazu werden die Pigmentzubereitungen aus einem magnetischen Pigment und dem erfindungsgemäßen Dispergiermittel, gegebenenfalls mit Füllstoffen, in einer Mischung aus einem Lösungsmittel oder Verdünnungsmittel, einem Bindemittel und weiteren Zusatzstoffen, wie einem Gleitmittel, dispergiert und auf eine unmagnetische Trägerschicht aufgetragen.

Zweckmäßigerweise werden die Pigmente zunächst mit dem erfindungsgemäßen Dispergiermittel in eine geeignete Gebrauchsform, eine Pigmentzubereitung, überführt. Die Pigmentzubereitungen können unmittelbar einer Anwendung, z. B. als Druckpaste oder Tinte, zugeführt werden oder zur Herstellung einer Gebrauchsform, z. B. einer Schreib- oder Ink-Jet-Tinte, verwendet werden. Die Pigmentzubereitungen lassen sich einfach und ohne unerwünschte Flokkulation in wässrige oder organische Systeme einarbeiten. Zur Herstellung der Pigmentzubereitungen werden die Pigmente mit den erfindungsgemäßen Dispergiermitteln und gegebenenfalls weiteren Zusatzstoffen in Gegenwart eines Verdünnungsmittels, wie vorzugsweise Wasser, vermischt. Zur sogenannten Flüssigpräparation, bei der die Feinverteilung des Pigments in Gegenwart relativ großer Mengen Verdünnungsmittel erfolgt, sind insbesondere Dissolver zur Vordispergierung und Rührwerkskugelmühlen geeignet, wie Perlmühlen allgemein und solche mit kleinen Mahlperlen (mit z. B. 0,3 mm Durchmesser), wie die Doppelzylinderperlmühlen (DCP-Super Flow®) von den Draiswerken GmbH, Mannheim, oder die Zentrifugalwirbelbettmühlen (ZWM) von Netsch Gerätebau GmbH, Selb. Auf diese Weise werden feinteilige und niedrigviskose Pigmentzubereitungen erhalten. Im Vergleich zu üblichen Dispergiermitteln führt das erfindungsgemäße Dispergiermittel zu vorteilhaft hohen Fließfähigkeiten und einem stabilen Lagerverhalten. Beim Aufbewahren von unter Verwendung des erfindungsgemäßen Dispergiermittels hergestellten Pigmentzubereitungen wurde über Monate hinweg kein Absetzen vom Pigment beobachtet. Das erfindungsgemäße Dispergiermittel ist außerdem für eine Vielzahl unterschiedlicher Pigmente universell anwendbar.

Alternativ kann das Pigment mit dem Dispergiermittel, gegebenenfalls unter Erwärmung, zu einer plastischen Masse verarbeitet werden. Hierfür sind insbesondere Misch- und Plastifiziermaschinen, wie Kneter, Extruder und/oder Walzenstühle, geeignet.

Das nach der Dispergierung in der Pigmentzubereitung enthaltene Pigment sollte möglichst feinteilig sein. Bevorzugt haben 95 %, besonders bevorzugt 99 %, der Pigmentteilchen eine Teilchengröße < 1 µm, vorzugsweise < 0,5 µm.

Die erfindungsgemäßen Pigmentzubereitungen enthalten in der Regel 0,1 bis 35 Gew.-%, bevorzugt 0,1 bis 20 Gew.-%, besonders bevorzugt 0,2 bis 10 Gew.-%, Pigment.

Wasser stellt den Hauptbestandteil der erfindungsgemäßen Pigmentzubereitungen dar. Sein Gehalt beträgt in der Regel 35 bis 90 Gew.-%, bevorzugt 45 bis 80 Gew.-%.

Vorzugsweise enthalten die erfindungsgemäßen Pigmentzubereitungen außerdem ein Feuchthaltemittel. Als Feuchthaltemittel eignen sich neben mehrwertigen, insbesondere 3 bis 8 Kohlenstoffatome enthaltenden Alkoholen, wie Glycerin, Erythrit, Pentaerythrit, Pentiten, wie Arabit, Adonit und Xylit, und Hexiten, wie Sorbit, Mannit und Dulcit, vor allem Polyalkylenglykole und Polyalkylenglykolmonoalkylether, worunter auch die niederen (Di-, Tri- und Tetra-)Alkylenglykole und Alkylenglykolether verstanden werden sollen. Bevorzugt weisen diese Verbindungen mittlere Molekulargewichte von 100 bis 1 500 auf, wobei Polyethylenglykole und Polyethylenglykolether mit einem mittleren Molekulargewicht von < 800 besonders bevorzugt sind.

Beispiele für diese Feuchthaltemittel sind Di-, Tri- und Tetraethylenglykol, Diethylenglykolmonomethyl-, -ethyl-, -propyl und -butylether und Trimethylenglykolmonomethyl-, -ethyl-, -propylund -butylether. Weiterhin geeignet sind Pyrrolidon und N-Alkylpyrrolidone, wie N-Methylpyrrolidone, die zusätzlich das Eindringen der Tinte in das Substratmaterial (z. B. Papier) unterstützen. Beispiele für besonders bevorzugte Feuchthaltemittel sind Mono-, Di- und Triethylenglykolmonobutylether und N-Methylpyrrolidon. Der Anteil des Feuchthaltemittels an den erfindungsgemäßen Pigmentzubereitungen beträgt in der Regel 0,1 bis 35 Gew.-%, insbesondere 5 bis 25 Gew.-%. Dabei ist oft die Verwendung von Kombinationen der genannten Feuchthaltemittel zweckmäßig. Besonders geeignet ist z. B. eine Kombination von N-Methylpyrrolidon und Triethylenglykolmonobutylether.

Selbstverständlich können die erfindungsgemäßen Pigmentzubereitungen weitere Hilfsmittel, wie sie insbesondere für (wässrige) - Ink-Jet-Tinten und in der Druck- und Lackindustrie üblich sind, enthalten. Genannt seien z. B. Konservierungsmittel (wie 1,2-Benzisothiazolin-3-on und dessen Alkalimetallsalze, Glutardialdehyd und/oder Tetramethylolacetylenharnstoff), Antioxidantien, Entgaser/Entschäumer (wie Acetylendiole und ethoxylierte Acetylendiole, die üblicherweise 20 bis 40 mol Ethylenoxid pro mol Acetylendiol enthalten und gleichzeitig auch dispergierend wirken oder Phosphorsäure-/Alkoholgemische), Mittel zur Regulierung der Viskosität, Verlaufshilfsmittel, Benetzer, Antiabsetzmittel, Glanzverbesserer, Gleitmittel, Haftverbesserer, Hautverhinderungsmittel, Mattierungsmittel, Emulgatoren, Stabilisatoren, Hydrophobiermittel, Lichtschutzadditive, Griffverbesserer und Antistatikmittel. Wenn diese Mittel Bestandteil der erfindungsgemäßen Pigmentzubereitungen sind, beträgt ihre Gesamtmenge in der Regel ≤ 1 Gew.-%, bezogen auf das Gewicht der Zubereitung.

Die erfindungsgemäßen Pigmentzubereitungen weisen üblicherweise eine dynamische Viskosität von 1 bis 20 mm²/sec, vorzugsweise 1 bis 5 mm²/sec auf.

Die Oberflächenspannung der erfindungsgemäßen Pigmentzubereitungen beträgt in der Regel 20 bis 70 mN/m, vorzugszweise 35 bis 60 mN/m.

Der pH-Wert der erfindungsgemäßen Pigmentzubereitungen liegt im Allgemeinen bei 5 bis 11, vorzugsweise bei 7 bis 9.

Bei der Herstellung der erfindungsgemäßen Pigmentzubereitungen geht man zweckmäßigerweise wie folgt vor:

Man mischt das Pigment, beispielsweise in Form eines wasserhaltigen Presskuchens oder in Form eines trockenen Pigmentpulvers, zusammen mit einem oder mehreren erfindungsgemäßen Dispergiermitteln in Gegenwart von Wasser und dispergiert in einer geeigneten Apparatur vor. Die erhaltene Mischung mahlt man anschließend in einer Mühle, um die gewünschte Pigmentteilchengrößenverteilung einzustellen, und gibt dann weitere Hilfsmittel zu. Schließlich nimmt man die Endeinstellung der Zubereitung vor, indem man noch entsprechende Mengen Wasser und gegebenenfalls ein oder mehrere Feuchthaltemittel sowie gegebenenfalls weitere Hilfsmittel zusetzt und nach dem Mischen mit einer Filtriervorrichtung mit Feinabtrennung im Bereich von in der Regel 10 bis 1 µm und vorzugsweise anschließend mit einer weiteren Filtriervorrichtung mit Feinabtrennung im Bereich von 1 bis 0,5 µm fixiert.

Die erfindungsgemäßen Pigmentzubereitungen können vorteilhaft in dem ebenfalls erfindungsgemäßen Verfahren zum Bedrucken von flächigen oder dreidimensional gestalteten Substraten nach dem Tintenstrahldruck-(Ink-Jet-)Verfahren eingesetzt werden, welches dadurch gekennzeichnet ist, dass man die Pigmentzubereitungen auf das Substrat aufdruckt und den erhaltenen Druck anschließend fixiert.

Beim Ink-Jet-Verfahren werden die üblicherweise wässrigen Tinten in kleinen Tröpfchen direkt auf das Substrat gesprüht. Man unterscheidet dabei ein kontinuierliches Verfahren, bei dem die Tinte gleichmäßig durch eine Düse gepresst und durch ein elektrisches Feld, abhängig vom zu druckenden Muster, auf das Substrat gelenkt wird, und ein unterbrochenes Tintenstrahl- oder "Drop-on-Demand"-Verfahren, bei dem der Tintenausstoß nur dort erfolgt, wo ein farbiger Punkt gesetzt werden soll. Bei dem letztgenannten Verfahren wird entweder über einen piezoelektrischen Kristall oder eine beheizte Kanüle (Bubble- oder Thermo-Jet-Verfahren) Druck auf das Tintensystem ausgeübt und so ein Tintentropfen herausgeschleudert. Solche Verfahrensweisen sind in Text. Chem. Color, Band 19 (8), Seiten 23 bis 29, 1987, und Band 21 (6), Seiten 27 bis 32, 1989, beschrieben.

Besonders geeignet sind die erfindungsgemäßen Pigmentzubereitungen als Tinten für das Bubble-Jet-Verfahren und für das Verfahren mittels eines piezoelektrischen Kristalls.

Die erfindungsgemäßen Pigmentzubereitungen können auf alle Arten von Substratmaterialien gedruckt werden. Als Substratmaterialien seien z. B.
- cellulosehaltige Materialien, wie Papier, Pappe, Karton, Holz und Holzwerkstoffe, die auch lackiert oder anderweitig beschichtet sein können,
- metallische Materialien, wie Folien, Bleche oder Werkstücke aus Aluminium, Eisen, Kupfer, Silber, Gold, Zink oder Legierungen dieser Metalle, die lackiert oder anderweitig beschichtet sein können,
- silikatische Materialien, wie Glas, Porzellan und Keramik, die ebenfalls beschichtet sein können,
- polymere Materialien jeder Art, wie Polystyrol, Polyamide, Polyester, Polyethylen, Polypropylen, Melaminharze Polyacrylate, Polyacrylnitril, Polyurethane, Polycarbonate, Polyvinylchlorid, Polyvinylalkohole, Polyvinylacetate, Polyvinylpyrrolidone und entsprechende Copolymere und Blockcopolymere, biologisch abbaubare Polymere und natürliche Polymere wie Gelatine,
- textile Materialien, wie Fasern, Garne, Zwirne, Maschenware, Webware, Non-wovens und konfektionierte Ware aus Polyester, modifiziertem Polyester, Polyestermischgewebe, cellulosehaltigen Materialien, wie Baumwolle, Baumwollmischgewebe, Jute, Flachs, Hanf und Ramie, Viskose, Wolle, Seide, Polyamid, Polyamidmischgewebe, Polyacrylnitril, Triacetat, Acetat, Polycarbonat, Polypropylen, Polyvinylchlorid, Polyestermikrofasern und Glasfasergewebe,
- Leder, sowohl Naturleder als auch Kunstleder, als Glatt-, Nappa- oder Veloursleder,
- Lebensmittel und Kosmetika
genannt.

Das Substratmaterial kann dabei flächig oder dreidimensional gestaltet sein und sowohl vollflächig als auch bildmäßig mit den erfindungsgemäßen Pigmentzubereitungen bedruckt werden.

Die erfindungsgemäßen Pigmentzubereitungen zeichnen sich als Ink-Jet-Tinten mit insgesamt vorteilhaften Anwendungseigenschaften, vor allem gutem Laufverhalten, aus und ergeben Drucke hoher Reib-, Nassreib-, Licht- und Wasserechtheit.

Die Pigmentzubereitungen eignen sich auch hervorragend zur Herstellung von Schreibtinten und von Tonern, insbesondere von wässrigen, flüssigen Tonern und von pulverförmigen Tonern. Die Toner können dabei z. B. konventionell durch Mischen, Kneten, Mahlen und Sichten von Pigmenten mit den polymeren Dispergiermitteln hergestellt werden.

Die Erfindung wird nun durch die folgenden Beispiele näher veranschaulicht.

### Beispiele

### Beispiel 1

Monomethylpolyethylenglykol (MG 2000, 1 mol) wird in Aceton gelöst (35%ige Lösung). Die Lösung wird auf 50 °C erwärmt und man gibt ein trifunktionelles Isocyanat (trimeres Hexamethylendiisocyanat) (Basonat® HB 100, BASF) (1 mol) sowie Dibutylzinndilaurat als Katalysator dazu. Entsprechend dem verbleibenden Isocyanatgehalt wird anschließend OH-monofunktionalisiertes Polyvinylpyrrolidon (PVP) (K-Wert etwa 17) zugegeben. Die Reaktion wird fortgesetzt, bis keine Isocyanatgruppen mehr nachzuweisen sind.

### Beispiel 2

Methylmethacrylat (2,2 mol) und Butylmethacrylat (1,5 mol) werden mit Azoisobutyronitril (AIBN) in THF polymerisiert. Als Regler wird Thioethanol (0,12 mol) zugesetzt. Zu dieser Lösung werden ein trifunktionelles Isocyanat (trimeres Hexamethylendiisocyanat) (Basonat® HB 100, BASF) (0,12 mol), gelöst in THF, sowie Dibutylzinndilaurat gegeben. Die Lösung wird mit THF auf einen Feststoffgehalt von 50 % eingestellt. Entsprechend dem verbleibenden Isocyanatgehalt wird OH-terminiertes Polyvinylpyrrolidon (K-Wert etwa 17, 50%ig in Methylisobutylketon) zugesetzt. Die Reaktion wird fortgesetzt, bis keine Isocyanatgruppen mehr nachzuweisen sind.

### Beispiel 3

25 g Ölsäure werden zusammen mit 2 Tropfen Dibutylzinndilaurat auf 155 °C erhitzt und 174 g ε-Caprolacton sowie 4 Tropfen Dibutylzinndilaurat zugetropft. Der Ansatz wird 22 h auf 160 °C gehalten. 22 g dieses Polymers werden zusammen mit 5,7 g Basonat HB 100 in Tetrahydrofuran gelöst und auf 65 °C erwärmt. Nach 2,5 h werden 60 g Polyvinylpyrrolidon (K-Wert etwa 17), in Tetrahydrofuran gelöst, zugegeben und die Mischung weitere 16 h auf etwa 70 °C gehalten.

### Beispiel 4

Monomethylpolyethylenglykol (MG 2000; 1 mol) wird in Tetrahydrofuran gelöst (45%ige Lösung). Die Lösung wird auf 50 °C erwärmt und man gibt ein trifunktionelles Isocyanat (trimeres Hexamethylendiisocyanat) (Basonat® HB 100, BASF) (1 mol) sowie Dibutylzinndilaurat als Katalysator dazu. Entsprechend dem verbleibenden Isocyanatgehalt wird anschließend N,N-Bis(hydroxy-ethyl)-aminomethyl-diethylphosphonat (Fyrol® 6, Akzo; etwa 2 mol; 50%ig in THF) zugesetzt. Die Reaktion wird fortgesetzt bis keine Isocyanatgruppen mehr nachzuweisen sind.

### Beispiel 5

54 g C₁₃/C₁₅-Oxoalkohol werden zusammen mit 5 Tropfen Dibutylzinndilaurat vorgelegt und 500 g ε-Caprolacton zusammen mit 10 Tropfen Dibutylzinndilaurat bei 160 °C zugetropft. Der Ansatz wird 9 h auf 160 °C gehalten. 22 g dieses Polymers werden zusammen mit 5,7 g Basonat HB 100 in Tetrahydrofuran gelöst und auf 65 °C erwärmt. Nach 2,5 h werden 60 g Polyvinylpyrrolidon (K-Wert etwa 17), in Tetrahydrofuran gelöst, zugegeben und die Mischung weitere 16 h auf etwa 70 °C gehalten.

### Beispiel 6

Durch Flüssigpräparation wurden verschiedene Pigmentzubereitungen hergestellt. Hierzu wurden jeweils 22,5 g (berechnet als Trockengewicht) Isoindolingelb (P.Y. 185) oder Ca-verlacktes BONS-Pigment (P.R. 57:1), 30 g Kupferphthalocyaninblau (P.B. 15:3) in Form von Presskuchen, 22,5 g Chinophthalongelb (P.Y. 138), 22,5 g Naphthol AS Rot (P.R. 146), 22,5 g Chinacridonrot (P.R. 122) oder 30 g farbtiefe Ruße (P.B. 7) in Form von Pigmentpulver mit 11,25 g (bzw. 15 g beim P.B. 7) Dispergierharz gemäß Beispiel 4 oder 1 und 3 g Polyethylenglykol (mittleres Molekulargewicht 400) sowie 1,5 g Fungizid (Proxel® XL2 von Zeneca) unter Zusatz von vollentsalztem Wasser in Ansätzen von 150 g vermischt und in einer Rührwerkskugelmühle mit jeweils 1 000 g Zirkonoxid-Perlen (Yttrium-stabilisiert; 0,3 bis 0,4 mm Durchmesser) dispergiert. Bei den Anreibungen von Rußpigmenten wurde an Stelle von Polyethylenglykol jeweils 1,2 g Propylenglykol zugesetzt. Die Nassmahlungen der einzelnen Pigmente erfolgten jeweils in einer vertikalen Rührwerkskugelmühle mit Doppelmahlscheibe bei 10 m/s Umfangsgeschwindigkeit. Zur Vermeidung von Schaumbildung wurde während der Dispergierung Antischaummittel (auf der Basis eines handelsüblichen Phosphorsäureestergemisches) in Mengen von bis zu 0,15 g hinzugegeben. Die Pigmentkonzentrationen und die mit dem Ultra Particle Analyser (UPA) von Leeds & Northrup gemessenen Teilchengrößen für die Pigmentzubereitungen sind in der nachfolgenden Tabelle 1 angegeben.

### Beispiel 7

Weiterhin wurden Knetversuche durchgeführt, in denen das Pigment in Form von Presskuchen oder in Form von Pulver mit dem Harz zunächst im Kneter vermischt und zu einer knetbaren Masse geformt wurde (für wässrigen Presskuchen wurden hierfür bis zu 2 Stunden benötigt). Anschließend wurde die dann gut knetbare Masse bei ca. 140 °C 2 Stunden lang geknetet.

Es wurden auf diese Weise jeweils Pigmentpräparationen von 44 Gew.-% durch Heißknetung im IKA®-Kneter (von Jahnke und Kunkel) hergestellt. Nach Abkühlung und mechanischer Zerkleinerung der Festharzpräparationen konnten diese durch Verdünnung und Lösung mit vollentsalztem Wasser in neutrale wässrige Pigment-Dispersionen überführt werden. Durch Trockenmahlung mit einer Strahlmühle konnten aber auch Pulverpräparationen für den Einsatz als Toner erzeugt werden.

Mit einem Presskuchen auf Basis von β-Kupferphthalocyanin Blau (45,6 Gew.-%, berechnet trocken P.B. 15:3) wurde mit Dispergierharz nach Beispiel 1 eine Harz-Präparation mit einem Pigmentgehalt von 45,2 Gew.-% durch Heißknetung hergestellt. Es wurden 120 g Harz in den IKA®-Kneter gegeben und bei 120 °C aufgeschmolzen, danach wurden 219,3 g Pigmentpresskuchen hinzugegeben und die Temperatur auf bis zu 150 °C erhöht. Nach ca. 1 Stunde war das Wasser abgedampft und es entstand eine zähe Knetmasse. Diese Masse wurde über 2 Stunden bei 120 °C geknetet und zwischendurch Proben gezogen. Nach Abkühlung wurden die Produkte zerkleinert und in VE-Wasser in neutrale Flüssigpräparationen überführt. Teilchengrößenmessungen zeigen bereits nach 60 Minuten Knetdauer eine sehr hohe Feinverteilung des Pigmentes.

Mit einem Pigmentpulver auf Basis Chinophthalon Gelb (P.Y. 138) wurde mit Dispergierharz nach Beispiel 1 im IKA-Kneter eine Festharzpräparation mit einem Pigmentgehalt von 44 Gew.-% hergestellt. Es wurden 120 g Harz in den Kneter gegeben und bei 120 °C aufgeschmolzen, danach wurden 95,5 g Pigment eingefüllt und innerhalb von 5 Minuten in eine weiche Knetmasse überführt. Um eine stärkere Knetwirkung zu erreichen, wurde der Thermostat des Kneters in 15 Minuten von 120 °C auf 50 °C eingestellt. Die Knetmasse wurde sehr zähviskos und 2 Stunden geknetet, wobei alle 30 Minuten Proben gezogen wurden. Die abgekühlte Masse wurde mechanisch zerkleinert und mit vollentsalztem Wasser in eine neutrale Flüssigpräparation überführt. Teilchengrößenmessungen zeigen eine ständige Zunahme der Feinteiligkeit mit steigender Knetzeit mit der gewünschten hohen Feinteiligkeit zum Versuchsende.

### Beispiel 8

Die in Beispiel 6 erhaltenen Pigmentzubereitungen wurden durch Zusatz von Wasser und Tributylglykol in Tinten überführt. Die fertigen Tinten enthielten 3 % Farbpigmente und 10 % Tributylglykol. Darüber hinaus wurden am Beispiel von Isoindolin Gelb (P.Y. 185 aus Tabelle 1) wässrige Tinten (Pigmentierung: 3 Gew.-%) mit weiteren Lösungsmitteln (jeweils 10 Gew.-%), wie Dipropylenglykol, 2-Ethyl-2-(hydroxymethyl)-1,3-propandiol oder Pyrrolidon hergestellt (Tabelle 2). Die Tinten wurden zur Erstellung von Ausdrucken mit einem Tintenstrahldrucker (HP Deskjet 600) auf einem nicht gestrichenen Papier (plain paper) vom Typ Intercopy Laser Copier und auf einem beschichteten Papier vom Typ Epson 720 dpi Ink Jet Paper eingesetzt. An den erhaltenen Ausdrucken wurde die optische Dichte mit einem Spektraflash SF 600 Plus-CT (mit Ulbrichtkugel) von Datacolor im Absorptionsmaximum ermittelt. Die Ergebnisse sind in den nachstehenden Tabellen 1 und 2 angegeben. Die Wasserechtheit der Ausdrucke wurde ermittelt, indem in einer einheitlich bedruckten Fläche zwei parallele Schnitte und senkrecht hierzu ebenfalls zwei parallele Schnitte durchgeführt wurden. Hierdurch wurde in der Mitte der Fläche ein Quadrat ausgeschnitten, das 5 Minuten lang bei 200 U/min in 500 ml destilliertem Wasser gerührt wurde. Nach dem Trocknen wurde das ausgeschnittene Quadrat wieder in die Lücke zurückgesetzt. Es wurde die optische Dichte des ausgewaschenen Quadrats und der unbehandelten Umgebung gemessen. Bei allen Versuchen erreichte die optische Dichte des ausgewaschenen Quadrats im Rahmen der Messgenauigkeit die optische Dichte der unbehandelten Umgebung. Der Nassabriebversuch erfolgte mit einem feuchten Papiertuch unter leichtem Druck. Bei keiner Tinte wurde ein sichtbarer Abrieb festgestellt.

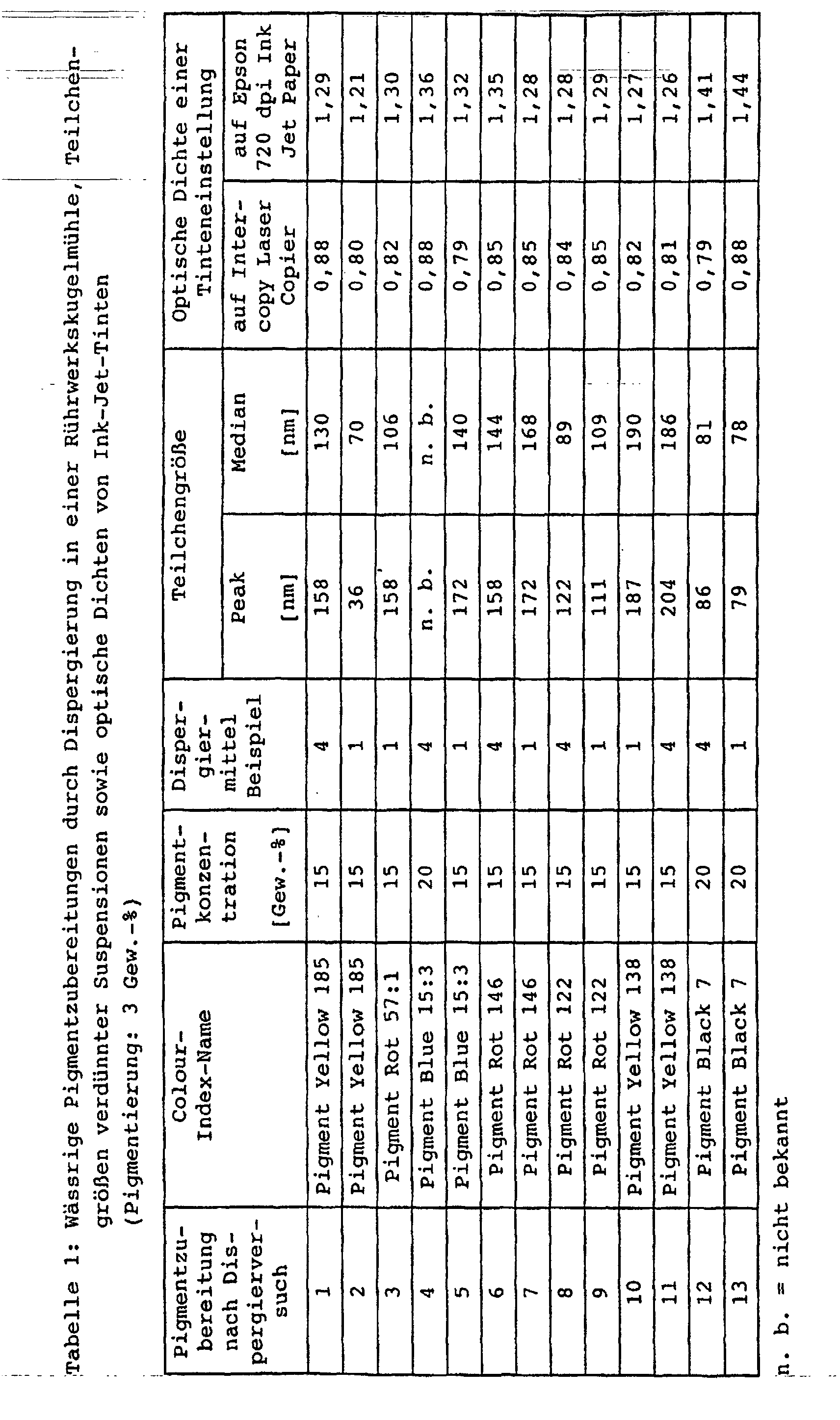

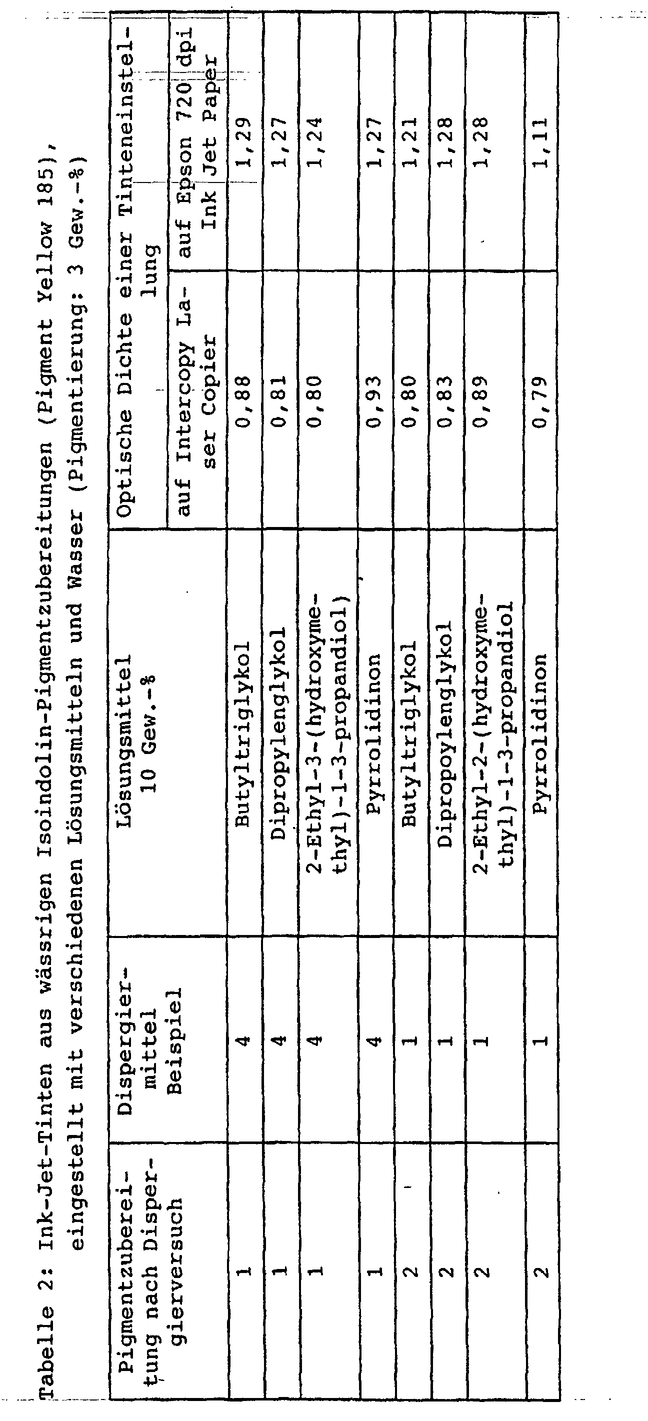

## Patentansprüche

1. Dispergiermittel, erhältlich durch Umsetzung
(i) eines di- oder polyfunktionellen Isocyanats mit
(ii) einer polymeren Verbindung der allgemeinen Formel
R³-Mₙ-XH
worin
X für COO, O, S oder NR¹ und R¹ für H oder eine C₁-C₆-Alkylgruppe steht,
R³ für Wasserstoff, C₁- bis C₂₈-Alkyl, C₂- bis C₂₈-Alkenyl, C₂- bis C₂₈-Alkinyl oder den Rest eines radikalischen Polymerisationsinitiators oder eines Kettenreglers steht,
M für gleiche oder verschiedene einpolymerisierte Einheiten von Monomeren, ausgewählt unter α,β-ethylenisch ungesättigten Mono- oder Dicarbonsäuren; gegebenenfalls mit Hydroxy, C₁-C₆-Alkoxy, Polyalkylenoxy oder Halogen ein- oder mehrfach substituierten C₁-C₂₀-(Cyclo)alkyl- oder C₇-C₂₀-Aralkylestern, Amiden, Nitrilen oder Anhydriden von α,β-ethylenisch ungesättigten Mono- oder Dicarbonsäuren; Vinyl- oder Allylestern aliphatischer oder aromatischer Carbonsäuren; Vinyl- oder Allylethern; ethylenisch ungesättigten Sulfonsäuren oder Sulfonsäurederivaten; gegebenenfalls halogenierten ethylenisch ungesättigten aliphatischen C₂-C₂₀-Kohlenwasserstoffen; aromatischen ethylenisch ungesättigten Verbindungen oder zu Polyphosphacenen polymerisierbaren Verbindungen; oder für 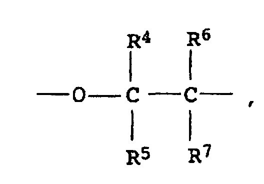 ―O―CO―R⁸―, ―CO―O―R⁸―
oder ― CO ― O ― R⁹ ― O ― CO ― R¹⁰ ―
steht, worin R⁴, R⁵, R⁶ und R⁷ unabhängig voneinander für H, C₁- bis C₆-Alkyl, C₆-bis C₂₀-Aryl, -CH₂-Cl oder -CH₂-OH stehen, und R⁸, R⁹ und R¹⁰ unabhängig voneinander für eine C₂- bis C₂₀-Alkylen-, Arylen oder Aralkylengruppe stehen, und
n für eine ganze Zahl zwischen 0 und 10 000 steht; und entweder
(iii) einem an einem Kettenende mit einer Gruppe YH terminierten Homopolymer eines unter N-Vinylamiden, N-Vinyllactamen, vinyl- oder allylsubstituierten stickstoffhaltigen Heterocyclen ausgewählten Monomers oder Copolymer eines oder mehrerer der genannten Monomere und gegebenenfalls weiterer Monomere, wobei Y für COO, O, S oder NR² und R² für H oder eine C₁-C₆-Alkylgruppe steht; oder
(iv) einem eine Gruppe YH aufweisenden organischen Phosphonsäureester, wobei Y die bereits angegebene Bedeutung hat.

2. Dispergiermittel nach Anspruch 1, **dadurch gekennzeichnet, dass** es sich bei der polymeren Verbindung um einen Polyoxyalkylenglykolmonoalkylether oder ein Polymer eines oder mehrerer C₁-C₄-Alkylmethacrylate handelt.

3. Dispergiermittel nach einem der Ansprüche 1 oder 2, **dadurch gekennzeichnet, dass** das gewichtsgemittelte Molekulargewicht der polymeren Verbindung etwa 250 bis etwa 1000000 beträgt.

4. Dispergiermittel nach einem der vorhergehenden Ansprüche, **dadurch gekennzeichnet, dass** es sich bei dem Homo- oder Copolymer um ein Homopolymer eines unter N-Vinylpyrrolidon, N-Vinylcaprolactam, N-Vinylimidazol und N-Vinylformamid ausgewählten Monomers oder ein Copolymer eines oderer mehrerer der genannten Monomere handelt.

5. Dispergiermittel nach einem der Ansprüche 1 bis 3, **dadurch gekennzeichnet, dass** es sich bei dem Phosphonsäureester um N,N-Bis(hydroxyethyl)-aminomethyl-diethylphosphonat handelt.

6. Dispergiermittel nach einem der vorhergehenden Ansprüche, **dadurch gekennzeichnet, dass** es sich beim dem Di- oder Polyisocyanat um ein aliphatisches Diisocyanat oder ein Isocyanuratgruppen oder Biuretgruppen aufweisendes Polyisocyanat handelt.

7. Verwendung eines oder mehrerer Dispergiermittel nach einem der Ansprüche 1 bis 6 zur Dispergierung von Farbpigmenten und/oder magnetischen Pigmenten.

8. Verwendung eines oder mehrerer Dispergiermittel nach einem der Ansprüche 1 bis 6 zur Herstellung einer Tinte für Tintenstrahldrucker.

9. Pigmentzubereitung, enthaltend ein oder mehrere Pigmente, ein oder mehrere Dispergiermittel nach einem der Ansprüche 1 bis 6 und gegebenenfalls übliche Hilfsstoffe.

10. Verwendung der Pigmentzubereitung nach Anspruch 9 zur Herstellung von Tonern.

11. Tinte zur Verwendung in Tintenstrahldruckern, umfassend als wesentliche Bestandteile:
(i) ein wässriges Tintenmedium,
(ii) ein oder mehrere Pigmente und
(iii) ein oder mehrere Dispergiermittel
nach einem der Ansprüche 1 bis 6.

12. Verfahren zum Bedrucken von Substraten nach dem Tintenstrahldruckverfahren, **dadurch gekennzeichnet, dass** auf das Substrat eine Tinte nach Anspruch 11 aufgedruckt wird.

## Claims

1. A dispersant obtainable by reacting
(i) a di- or polyfunctional isocyanate with
(ii) a polymeric compound of the general formula
R³-Mₙ-XH
where
X is COO, O, S or NR¹ and R¹ is H or C₁-C₆-alkyl,
R³ is hydrogen, C₁-C₂₈-alkyl, C₂-C₂₈-alkenyl, C₂-C₂₈-alkynyl or the residue of a free-radical polymerization initiator or of a chain regulator,
M represents identical or different polymerized units of monomers selected from the group consisting of α,β-ethylenically unsaturated mono- or dicarboxylic acids; unsubstituted or hydroxyl-, C₁-C₆-alkoxy-, polyalkyleneoxy- or halogen-mono- or -polysubstituted C₁-C₂₀-(cyclo)alkyl or C₇-C₂₀-aralkyl esters, amides, nitriles or anhydrides of α,β-ethylenically unsaturated mono- or dicarboxylic acids; vinyl or allyl esters of aliphatic or aromatic carboxylic acids; vinyl or allyl ethers; ethylenically unsaturated sulfonic acids or sulfonic acid derivatives; halogenated or unhalogenated ethylenically unsaturated aliphatic C₂-C₂₀ hydrocarbons; aromatic ethylenically unsaturated compounds and compounds polymerizable to form polyphosphacenes; or is 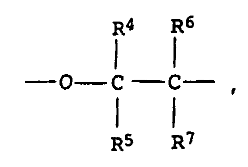 ―O―CO―R⁸― ―CO―O―R⁸―
or ―CO―O―R⁹―O―CO―R¹⁰―
where R⁴, R⁵, R⁶ and R⁷ are independently H, C₁-C₆-alkyl, C₆-C₂₀-aryl, -CH₂-Cl or -CH₂-OH, and R⁸, R⁹ and R¹⁰ are independently a C₂-C₂₀-alkylene, arylene or aralkylene group, and
n is an integer between 0 and 10,000; and either
(iii) an HY-terminated homopolymer of a monomer selected from the group consisting of N-vinylamides, N-vinyllactams and vinyl- or allyl-substituted nitrogenous heterocycles or copolymer of one or more of the monomers mentioned and optionally further monomers, where Y is COO, O, S or NR² and R² is H or C₁-C₆-alkyl; or
(iv) an HY-functional organic phosphonic ester, where Y is as defined above.

2. A dispersant as claimed in claim 1, wherein the polymeric compound is a polyoxyalkylene glycol monoalkyl ether or a polymer of one or more C₁-C₄-alkyl methacrylates.

3. A dispersant as claimed in either of claims 1 or 2, wherein the weight average molecular weight of the polymeric compound is within the range from about 250 to about 1,000,000.

4. A dispersant as claimed in any of the preceding claims, wherein the homo- or copolymer is a homopolymer of a monomer selected from the group consisting of N-vinylpyrrolidone, N-vinylcaprolactam, N-vinylimidazole and N-vinylformamide or a copolymer of one or more of the monomers mentioned.

5. A dispersant as claimed in any of claims 1 to 3, wherein the phosphonic ester is N,N-bis(hydroxyethyl)aminomethyldiethyl phosphonate.

6. A dispersant as claimed in any of the preceding claims, wherein the di- or polyisocyanate is an aliphatic diisocyanate or a polyisocyanate containing isocyanurate groups or biuret groups.

7. The use of one or more dispersants as set forth in any of claims 1 to 6 for dispersing color pigments and/or magnetic pigments.

8. The use of one or more dispersants as set forth in any of claims 1 to 6 for preparing an ink for inkjet printers.

9. A pigment preparation comprising one or more pigments, one or more dispersants as set forth in any of claims 1 to 6 and optionally customary assistants.

10. The use of the pigment preparation of claim 9 for preparing toners.

11. An ink for use in inkjet printers, comprising as essential constituents:
(i) an aqueous ink medium,
(ii) one or more pigments, and
(iii) one or more dispersants
as set forth in any of claims 1 to 6.

12. A method for printing substrates by the inkjet printing process, which comprises printing the substrate with an ink as claimed in claim 11.

## Revendications

1. Dispersant pouvant être obtenu par réaction
(i) d'un isocyanate di- ou polyfonctionnel, avec
(ii) un composé polymère de formule générale
R³-Mₙ-RH
dans laquelle
X est COO, O, S ou NR¹, et R¹ est H ou un groupe alkyle en C₁₋C₆,
R³ est un atome d'hydrogène ou un groupe alkyle en C₁-C₂₈, alcényle en C₂-C₂₈, alcynyle en C₂-C₂₈, ou encore le résidu d'un amorceur de polymérisation radicalaire ou d'un régulateur de chaîne,
M désigne des motifs polymérisés, identiques ou différents, de monomères choisis parmi les acides mono- ou dicarboxyliques à insaturation α,β ; les esters (cyclo)alkyliques en C₁-C₂₀ ou aralkyliques en C₇-C₂₀, amides, nitriles ou anhydrides d'acides mono- ou dicarboxyliques à insaturation α,β, une ou plusieurs fois substitués par des substituants hydroxy, alcoxy en C₁-C₆, polyalkylènoxy ou halogéno; les esters vinyliques ou allyliques d'acides sulfoniques à insaturation éthylénique ou les dérivés d'acides sulfoniques ; les hydrocarbures aliphatiques en C₂-C₂₀ à insaturation éthylénique et éventuellement halogénés, les composés aromatiques à insaturation éthylénique
ou les composés polymérisables en polyphosphacènes ; ou encore 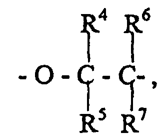 -O-CO-R⁸-, -CO-O-R⁸-, ou -CO-O-R⁹-O-O-CO-R¹⁰,
où R⁴, R⁵, R⁶ et R⁷ représentent chacun indépendamment des autres H ou un groupe allyle en C₁₋C₆, aryle en C₆-C₂₀, -CH₂-Cl ou -CH₂-OH, et R⁸, R⁹ et R¹⁰ représentent chacun indépendamment des autres un groupe alkylène en C₂-C₂₀, arylène ou aralkylène, et
n est un nombre entier de 0 à 10 000 ; et
(iii) soit avec un homopolymère, terminé par un groupe YH à une extrémité de la chaîne, d'un monomère choisi parmi les N-vinylamides, les N-vinyllactames, les composés hétérocycliques azotés à substitution vinyle ou allyle, ou encore un copolymère de l'un ou plusieurs des monomères mentionnés ci-dessus et éventuellement d'autres monomères, où Y est COO, O, S ou NR², et R² est H ou un groupe alkyle en C₁-C₆ ; ou
(iv) soit avec un ester organique de l'acide phosphorique comportant un groupe YH, où Y a les significations données ci-dessus.

2. Dispersant selon la revendication 1, **caractérisé en ce que**, pour ce qui concerne le composé polymère, il s'agit d'un éther monoalkylique de polyoxyalkylèneglycol ou d'un polymère d'un ou plusieurs méthacrylates d'alkyle en C₁-C₄.

3. Dispersant selon l'une des revendications 1 ou 2, **caractérisé en ce que** la masse moléculaire moyenne en masse du composé polymère est d'environ 250 à environ 1 000 000.

4. Dispersant selon l'une des revendications précédentes, **caractérisé en ce que**, pour ce qui concerne l'homo- ou le copolymère, il s'agit d'un homopolymère d'un monomère choisi parmi la N-vinylpyrrolidone, le N-vinylcaprolactame, le N-vinylimidazole et le N-vinylformamide, ou d'un copolymère d'un ou plusieurs des monomères mentionnés.

5. Dispersant selon l'une des revendications 1 à 3, **caractérisé en ce que**, pour ce qui concerne l'ester d'acide phosphonique, il s'agit du diéthylphosphonate de N,N-bis(hydroxyéthyl)-aminométhyle.

6. Dispersant selon l'une des revendications précédentes, **caractérisé en ce que**, pour ce qui concerne le di- ou le polyisocyanate, il s'agit d'un diisocyanate aliphatique ou d'un polyisocyanate comportant des groupes isocyanurates ou biuret.

7. Utilisation d'un ou plusieurs dispersants selon l'une des revendications 1 à 6 pour disperser des pigments colorés et/ou des pigments magnétiques.

8. Utilisation d'un ou plusieurs dispersants selon l'une des revendications 1 à 6 pour préparer une encre pour imprimante à jet d'encre.

9. Préparation pigmentaire contenant un ou plusieurs pigments, un ou plusieurs dispersants selon l'une des revendications 1 à 6 et éventuellement des adjuvants usuels.

10. Utilisation de la préparation pigmentaire selon la revendication 9 pour préparer des toners.

11. Encre pour utilisation dans des imprimantes à jet d'encre, comprenant en tant que constituants principaux :
(i) un milieu d'encre aqueux,
(ii) un ou plusieurs pigments, et
(iii) un ou plusieurs dispersants
selon l'une des revendications 1 à 6.

12. Procédé d'impression de substrat par le procédé au jet d'encre, **caractérisé en ce qu'**on applique sur le substrat une encre selon la revendication 11.
